# FASCICULE DE BREVET EUROPEEN

(11) **EP 1 922 965 B1**
(45) Date de publication et mention de la délivrance du brevet: **15.08.2018**
(21) Numéro de dépôt: 07356157.3
(22) Date de dépôt: 08.11.2007
(51) Int. Cl.: A47J 37/12

(54) **Appareil de cuisson et dispositif de monte et baisse pivotant d'un panier pour egoutter les aliments cuits**
Gargerät und Vorrichtung zur Hebung und Senkung eines Fritierkorbes zur Entwässerung von gekochten Speisen
Cooking appliance and device for raising and lowering a basket for draining the cooked food

(30) Priorité: 15.11.2006 FR 0609963
(43) Date de publication de la demande: 21.05.2008
(73) Titulaire: SEB S.A., 69130 Ecully (FR)
(72) Inventeur: Mathey, Olivier, 21120 IS Sur Tille (FR); Dirand, Pascal, 21160 Marsannay La Cote (FR)
(74) Mandataire: Rivière, Sophie

(56) Documents cités:
- FR-A1- 2 754 163

## Description

La présente invention concerne le domaine technique général des appareils de cuisson comportant un récipient de cuisson, destiné à contenir un bain de cuisson, et un panier de cuisson, destiné à contenir les aliments à cuire.
La présente invention se rapporte plus notamment aux appareils de cuisson équipés d'un dispositif de monte et baisse du panier dans le récipient et plus particulièrement mais non exclusivement aux friteuses électriques.
La présente invention concerne les appareils de cuisson du type précité et/ou les dispositifs de monte et baisse du panier pour appareil de cuisson du type précité.
Dans le domaine cité, on connaît des friteuses dont le dispositif de monte et baisse amène le panier contenant les aliments à cuire dans une position haute, émergée au dessus du bain de cuisson. Dans cette position, l'excès d'huile ou d'autres matières constituant le bain de cuisson peut s'écouler par gravité. Ce principe est peu efficace car l'huile s'écoule difficilement et les aliments cuits réabsorbent rapidement l'huile.
On connaît par ailleurs des friteuses telles que décrites dans les documents US6834578, US2004154474 et CN2489697 comportant un dispositif de monte et baisse équipé d'un moteur et d'un excentrique permettant de faire vibrer le panier, celui-ci étant en position haute. De tels dispositifs permettent de limiter la quantité de matière grasse résiduelle. Ces dispositifs présentent toutefois l'inconvénient d'être de réalisation complexe et coûteuse et surtout réservée à des produits haut de gamme.

Un autre dispositif de l'art antérieur est divulgué par le document FR 2 754 163 A1. Un but de la présente invention est de remédier aux inconvénients précités et de proposer, dans un appareil de cuisson, un dispositif de monte et baisse d'un panier dans une cuve, permettant de réduire la quantité de matière grasse excédentaire sur les aliments après cuisson, qui présente une conception très simple et économique.
Un autre but de la présente invention est de proposer un dispositif de monte et baisse du type précité comportant une construction très ergonomique
Un autre but de la présente invention est de proposer un dispositif de monte et baisse du type précité qui permette d'obtenir une meilleure homogénéité de cuisson.
Un autre but de la présente invention est de proposer, dans un appareil de cuisson, un dispositif de monte et baisse du type précité qui exploite au mieux la géométrie de la cuve, fiable et qui fonctionne en toute sécurité.
Un autre but de la présente invention est de proposer, dans un appareil de cuisson, un dispositif de monte et baisse du type précité dont le nettoyage soit facilité.

Un autre but de l'invention est de proposer un appareil de cuisson comportant un dispositif de monte et baisse du type précité.
Un autre but de l'invention est de proposer un appareil de cuisson comportant un dispositif de monte et baisse qui permette de réduire la quantité de matière grasse excédentaire sur les aliments cuits et qui présente une construction très simple et économique.
Ces buts sont atteints avec un dispositif de monte et baisse d'un panier dans une cuve d'un appareil de cuisson tel que défini dans la revendication 1, notamment friteuse, ledit dispositif comportant un support prévu pour venir en appui sur ledit appareil de cuisson, le panier étant monté mobile par rapport au support entre une position relevée et une position abaissée, une poignée montée mobile sur le support entre une première position, dans laquelle le panier amené par le relèvement de la poignée occupe la position relevée, et une deuxième position, dans laquelle le panier occupe la position abaissée, du fait que le support inclut un moyeu autorisant un degré de liberté en rotation dudit moyeu par rapport à l'appareil selon un axe s'étendant en direction du panier pour mettre le panier en rotation par la rotation de la poignée, la poignée étant montée mobile sur le moyeu selon un axe de pivotement transversal par rapport à l'axe s'étendant en direction du panier entre la première position et la deuxième position.
En d'autres termes, l'axe s'étend selon une direction traversant une face latérale de l'appareil de cuisson.
Cette disposition permet de réaliser un dispositif de monte et baisse qui autorise la mise en rotation du panier par un mouvement de rotation, très simple et très facile à mettre en oeuvre. Le panier relevé au dessus du bain de cuisson peut être secoué par rotation de la poignée autour de l'axe pour égoutter les aliments contenus dans ledit panier.
Cette disposition permet également à l'utilisateur, par l'intermédiaire de la poignée, de mettre le panier en rotation sans l'utilisation d'un moteur ce qui garantit une construction économique et une grande fiabilité du dispositif.
Avantageusement le moyeu présente une face inférieure comprenant des moyens d'appui autorisant un degré de liberté en rotation, selon l'axe s'étendant en direction du panier.
Avantageusement la poignée est montée mobile sur le moyeu selon un axe de pivotement transversal par rapport à l'axe s'étendant en direction du panier.
Cette disposition permet à la poignée d'être rabattue lorsque le panier est en position basse.
Avantageusement le moyeu présente une configuration cylindrique.
Cette disposition permet de matérialiser de façon simple sur le moyeu un guidage en rotation.
Avantageusement le support inclut un palier dans lequel le moyeu peut pivoter.
Cette disposition permet de réaliser un ensemble mécanique pour le mouvement de rotation très compact. De plus cette disposition permet d'obtenir un palier présentant une face en grande partie fermée du côté intérieur de l'appareil, ce qui autorise un nettoyage facile de cette zone et une étanchéité simple à mettre en oeuvre.

Avantageusement le moyeu et le palier comportent des butées prévues pour limiter la rotation du moyeu par rapport au palier.

Cette disposition permet de réaliser un arrêt franc lors de la rotation du panier et par la même faire tomber des aliments cuits l'excès de matière grasse. En réalisant la mise en rotation du panier dans un sens jusqu'à l'une des butées et ensuite la même opération dans l'autre sens jusqu'à l'autre butée, l'utilisateur répétant cette séquence plusieurs fois va éliminer l'excès de matière grasse des aliments cuits très facilement.

Cette disposition permet également, en cours de cuisson, après que l'utilisateur ait remonté le panier en position relevée, de re-répartir les aliments à cuire dans le panier en réalisant la mise en rotation alternée du panier.

La limitation de l'amplitude de la rotation permet également d'éviter de prévoir un couvercle sur le panier.

La limitation de l'amplitude de la rotation permet également d'avoir un panier qui a une ouverture dont la taille est proche de celle de la cuve

Avantageusement le palier présente une conformation inférieure agencée transversalement par rapport à l'axe.

Cette disposition permet de réaliser un dispositif de monte et baisse amovible mais très stable lorsque celui-ci est posé sur le bord de l'appareil. Cette disposition permet également à l'utilisateur de visualiser rapidement la zone de mise en place pour repositionner le dispositif de monte et baisse sur l'appareil.

Les buts de la présente invention sont atteints également avec un appareil de cuisson comportant une cuve, un panier, un dispositif de monte et baisse du panier dans la cuve, du fait que le dispositif de monte et baisse est conforme à l'une des dispositions citées précédemment.

Le dispositif de monte et baisse peut être amovible par rapport à la cuve de l'appareil de cuisson.

Avantageusement l'appareil comporte un boîtier fermé par un couvercle, le boîtier recevant la cuve.

Cette disposition permet d'obtenir un appareil complètement fermé lors de la cuisson. L'utilisateur peut réduire la quantité de matière grasse sur les aliments en fin de cuisson en toute sécurité, la matière grasse excédentaire retombant dans la cuve.

Avantageusement le palier est disposé entre le boîtier et le couvercle.

Cette disposition permet d'avoir une construction de l'appareil de cuisson très simple pour rendre le dispositif de monte et baisse amovible, une fois le couvercle ouvert en fin de cuisson des aliments.

Avantageusement la conformation du palier repose sur un bord supérieur de la cuve.

Cette disposition permet d'avoir une bonne stabilité du dispositif de monte et baisse en rapprochant le plus possible le panier et le point d'appui dudit dispositif sur le bord de l'appareil,

Selon un autre mode de réalisation, l'appareil de cuisson présente un bord supérieur formant un guidage en rotation inférieur pour le moyeu.

Cette disposition permet une construction de l'appareil de cuisson encore plus simple en réalisant la moitié inférieure du guidage en rotation du dispositif de monte et baisse directement avec le moyeu et le bord supérieur de l'appareil sans pièces supplémentaires.

Avantageusement encore, le couvercle présente un bord inférieur formant un guidage en rotation supérieur pour le moyeu.

Cette disposition peut venir compléter la disposition précédente. La moitié supérieure du guidage en rotation du dispositif de monte et baisse est réalisée directement avec le moyeu et le bord inférieur du couvercle.

Selon un autre mode de réalisation, les buts de l'invention sont atteints avec un appareil de cuisson, tel que défini dans la revendication 13, comportant un boîtier, un dispositif de monte et baisse d'un panier dans une cuve, le dispositif de monte et baisse comprenant un support prévu pour venir en appui sur le bord du boîtier, le panier étant monté mobile par rapport au support entre une position relevée et une position abaissée, et une poignée montée mobile sur le support entre une première position, dans laquelle le panier occupe la position relevée, et une deuxième position, dans laquelle le panier occupe la position abaissée, du fait que l'appareil présente un organe de réception mobile ménagé sur un bord supérieur du boîtier, prévu pour porter le support; l'organe de réception mobile autorisant un degré de liberté en rotation dudit support par rapport à l'appareil selon un axe s'étendant en direction du panier, l'organe de réception mobile étant formé par un demi pivot monté mobile en rotation dans un demi palier formé dans le boîtier.
Par demi palier, on entend un élément permettant de réaliser un appui ainsi qu'un guidage inférieur pour le demi pivot. On peut envisager de compléter le guidage par un autre demi palier dans le couvercle.
Ce mode de réalisation diffère des précédents en ce qu'il permet de simplifier le dispositif de monte et baisse en reportant le guidage en rotation du dispositif de monte et baisse sur l'appareil de cuisson. Ainsi un dispositif de monte et baisse standard peut être utilisé.
Le bord supérieur de l'appareil peut appartenir au boîtier et / ou à la cuve.
L'invention sera mieux comprise à l'étude des modes de réalisation pris à titre nullement limitatif et illustrés dans les figures annexées dans lesquelles :
- La figure 1 est une vue en perspective d'un premier exemple de réalisation d'un l'appareil selon l'invention.
- La figure 2 est une vue éclatée en perspective de l'appareil illustré à la figure 1.
- La figure 3 a est une vue en perspective de l'appareil illustré aux figures 1 et 2 sans le couvercle, le panier étant pivoté dans le sens horaire.
- La figure 3b est une vue en perspective de l'appareil illustré aux figures 1 à 3a sans le couvercle, le panier étant pivoté dans le sens antihoraire.
- La figure 4 est une vue éclatée du dispositif de monte et baisse du panier selon l'invention de l'appareil illustré aux figures 1 à 3b.
- La figure 5a est une vue schématique de face d'un deuxième exemple de réalisation de l'appareil selon l'invention.
- La figure 5b est une vue schématique en coupe de l'appareil de la figure 5a.
- La figure 6a est une vue schématique de face d'un troisième exemple de réalisation de l'appareil selon l'invention.
- La figure 6b est une vue schématique en coupe de l'appareil de la figure 6a.

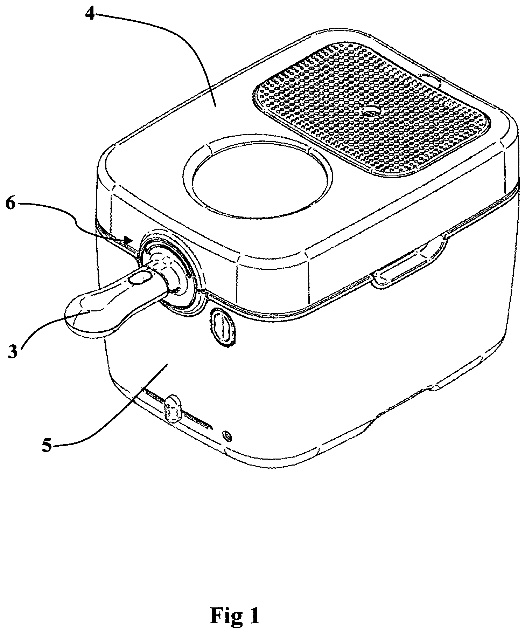

Les figures 1 à 4 illustrent un premier exemple de réalisation d'un appareil de cuisson comportant un dispositif de monte et baisse 6 selon l'invention.

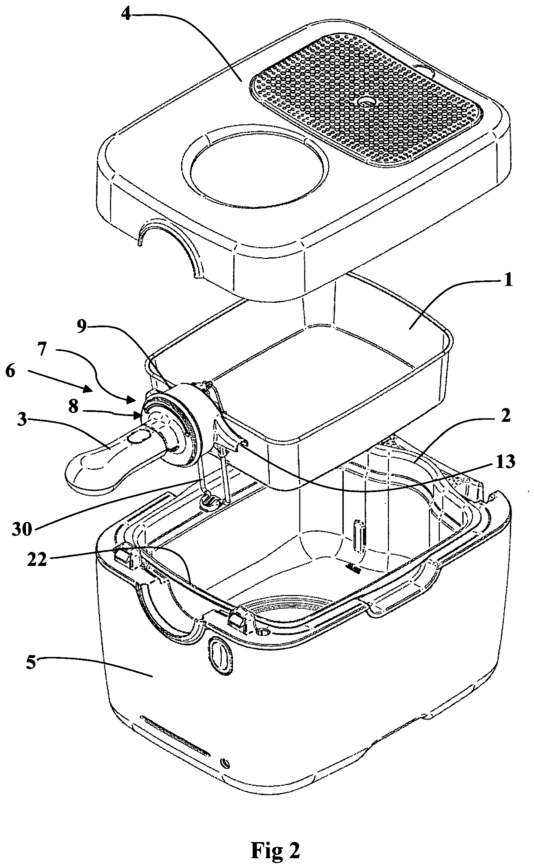

Tel que visible sur les figures 1 et 2, l'appareil de cuisson réalisé conformément à l'invention comprend un boîtier 5, un couvercle 4, le dispositif de monte et baisse 6, une cuve 2 et un panier 1. Le dispositif de monte et baisse 6 du panier 1 repose sur le bord de la cuve 2 et comporte une glissière 30 sur laquelle le panier 1 peut coulisser.

Le dispositif de monte et baisse 6 comporte une poignée 3 montée mobile sur un support 7 entre une première position, sensiblement horizontale, dans laquelle le panier 1 occupe une position relevée dans la cuve 2, et une deuxième position, sensiblement verticale avec l'extrémité libre de la poignée 3 orientée vers le bas, dans laquelle le panier 1 occupe une position abaissée dans la cuve 2. Ainsi le panier 1 est monté mobile par rapport au support 7 entre la position relevée et la position abaissée.

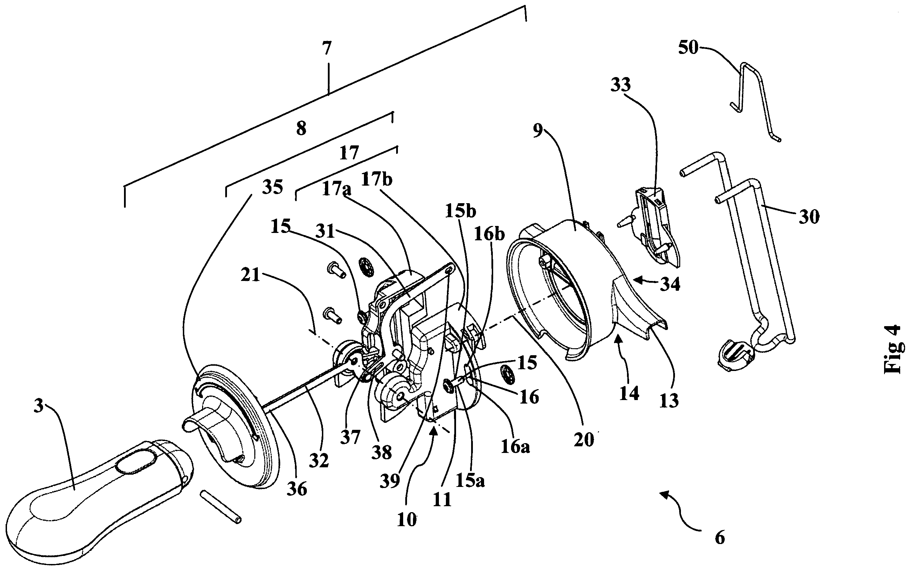

Selon l'invention tel que visible sur la figure 4, le support 7 comprend un moyeu 8 autorisant un degré de liberté en rotation dudit moyeu 8 par rapport à l'appareil, selon un axe 20 s'étendant en direction du panier 1. Le moyeu 8 comporte un socle 17 divisé en deux parties 17a et 17b, un levier 31 articulé dans le socle 17, une pièce de transmission 32 montée pivotante dans le socle 17. Une extrémité 36 de la pièce de transmission 32 est agencée dans la poignée 3. L'autre extrémité 37 de la pièce de transmission 32 coopère avec une lumière 38 aménagée dans une extrémité du levier 31. L'autre extrémité du levier 31 comporte une ouverture 39 dans laquelle est monté un moyen d'accrochage 50 qui est relié au panier 1 (non représenté sur la figure 4).

Le moyeu 8 présente une face inférieure 10 comportant des moyens d'appui 11 autorisant un degré de liberté en rotation, selon l'axe 20. Plus particulièrement, le moyeu 8 présente une configuration cylindrique. La poignée 3 est articulée sur la face externe du moyeu 8 disposée vers l'extérieur de l'appareil, selon un axe de rotation transversal 21 par rapport à l'axe 20. Ainsi, la poignée 3 est montée mobile sur le moyeu 8 entre la première position, sensiblement horizontale, et la deuxième position, sensiblement verticale. La glissière 30 est montée sur la face interne du moyeu 8 disposée vers l'intérieur de l'appareil.

Le support 7 comprend un palier 9 dans lequel pivote la configuration cylindrique du moyeu 8. Le palier 9 comporte une face inférieure 14 prévue pour venir en appui sur la cuve 2 et le boîtier 5. Plus particulièrement, le palier 9 présente sur la face inférieure 14 une conformation 13 agencée transversalement par rapport à l'axe 20. Sur une face externe 34 du palier 9 est agencée une pièce d'étanchéité 33 réalisée dans un matériau souple. Le moyeu 8 comprend un cache 35 agencé du côté externe du socle 17. Le cache 35 assure l'étanchéité. Le palier 9 et le cache 35 forment un logement dans lequel sont agencés au moins partiellement les demi socles 17a et 17b du moyeu 8.

A titre de variante, la face externe 34 pourrait appartenir à une pièce autre que le palier 9.

Le palier 9 et le moyeu 8 comportent des butées 15a, 15b ; 16a, 16b prévues pour limiter la rotation du moyeu 8 par rapport au palier 9. Les butées 15a, 15b du palier 9 sont matérialisées par les côtés supérieurs et inférieurs de deux vis 15. Les butées 16a et 16b du socle 8 sont matérialisées par les extrémités de deux lumières oblongues 16.

Tel que visible sur la figure 2, le dispositif de monte et baisse 6 est disposé entre le boîtier 5 et le couvercle 4. La conformation inférieure 13 du palier 9 repose sur le bord supérieur 22 de la cuve 2.

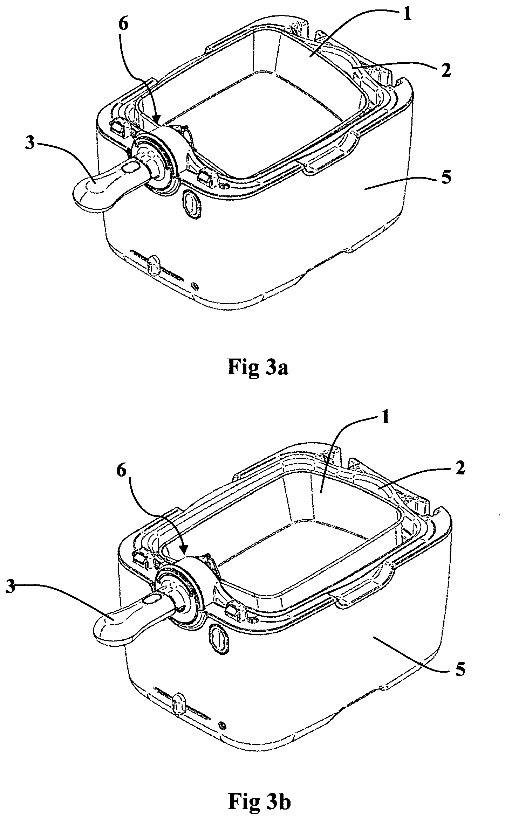

Tel que visible sur la fig 3a, la poignée 3 est en position horizontale et le panier 1 occupe une position relevée. Dans cette configuration, la butée 15b du palier 9 est en appui sur la butée 16b du moyeu 8 autorisant une course en rotation du panier par rapport à sa position horizontale comprise entre 5 et 20 degrés, de préférence 7,5 degrés, dans un sens horaire par rapport à la face avant de l'appareil.

Tel que visible sur la fig 3b, la poignée 3 est en position horizontale et le panier 1 occupe une position relevée. Dans cette configuration, la butée 15a du palier 9 est en appui sur la butée 16a du socle 8 autorisant une course en rotation du panier par rapport à sa position horizontale comprise entre 5 et 20 degrés, de préférence 7,5 degrés, dans un sens anti-horaire par rapport à la face avant de l'appareil.

Le fonctionnement de l'appareil et du dispositif de monte et baisse 6 selon l'invention est le suivant : après la réalisation d'un cycle de cuisson avec le panier 1 en position abaissée dans la cuve 2 contenant le bain de cuisson, l'utilisateur relève la poignée 3 en position horizontale, ce qui amène le panier 1 en position relevée dans l'appareil fermé. L'utilisateur fait ensuite pivoter la poignée 3 relevée autour de l'axe 20 pour amener la butée 15b du palier 9 en appui sur la butée 16b du moyeu 8 tel que représenté sur la figure 3a. L'arrêt franc du panier fait qu'une partie de l'excès de matière grasse se sépare des aliments cuits. En faisant pivoter la poignée 3 dans l'autre sens, l'utilisateur amène la butée 15a du palier 9 en appui sur la butée 16a du moyeu 8 tel que représenté sur la figure 3b, ce qui provoque également un arrêt franc du panier 1 et permet d'éliminer une autre partie de l'excès de matière grasse présente sur les aliments cuits. En répétant plusieurs fois cette séquence, l'utilisateur réduit de façon importante la quantité de matière grasse résiduelle sur les aliments cuits. L'utilisateur peut alors ouvrir l'appareil de cuisson, soulever le couvercle 4 et récupérer les aliments cuits en déplaçant l'ensemble poignée 3, dispositif de monte et baisse 6, panier 1. Une fois les aliments cuits vidés du panier 1, l'utilisateur repose la conformation 13 du dispositif de monte et baisse 6 sur le bord de la cuve 2.

L'utilisateur peut utiliser le même mode opératoire en cours du cycle de cuisson pour re-répartir les aliments à cuire par exemple entre deux plongées successives du panier 1 dans le bain de cuisson et ensuite ramener la poignée 3 en position verticale abaissée, ce qui amène le panier 1 en position basse.

Selon une autre variante non illustrée, le support 7 peut reposer uniquement sur le boîtier 5 ou uniquement sur la cuve 2.

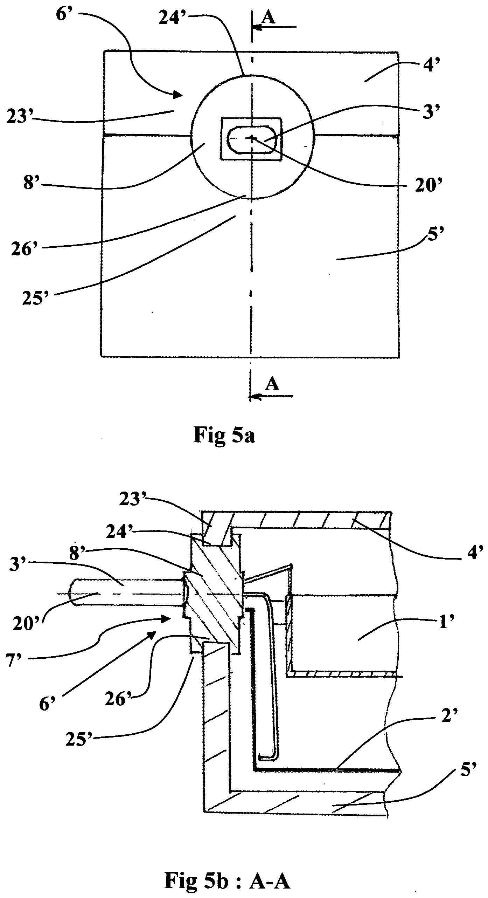

Le mode de réalisation illustré par les figures 5a et 5b concerne un appareil de cuisson comportant un boîtier 5', un couvercle 4', un dispositif de monte et baisse 6' d'un panier 1' dans une cuve 2', le dispositif de monte et baisse 6' comprenant un support 7' et une poignée 3'. Le support 7' inclut un moyeu 8' mais pas de palier.

Ce mode de réalisation diffère du premier mode de réalisation illustré aux figures 1 à 4 en ce que l'appareil présente un bord supérieur 25' formant un guidage inférieur 26' pour la rotation du moyeu 8' autour d'un axe 20', agencé en direction du panier 1'. Plus particulièrement le guidage en rotation 26' est ménagé dans le bord supérieur 25' du boîtier. L'appareil illustré aux figures 5a et 5b diffère également du premier mode de réalisation en ce que le couvercle 4' présente un bord inférieur 23' formant un guidage supérieur 24' pour la rotation du moyeu 8'.

Selon une variante non illustrée de ce mode de réalisation, le guidage inférieur pour la rotation du socle pourrait reposer au moins partiellement sur le bord supérieur de la cuve.

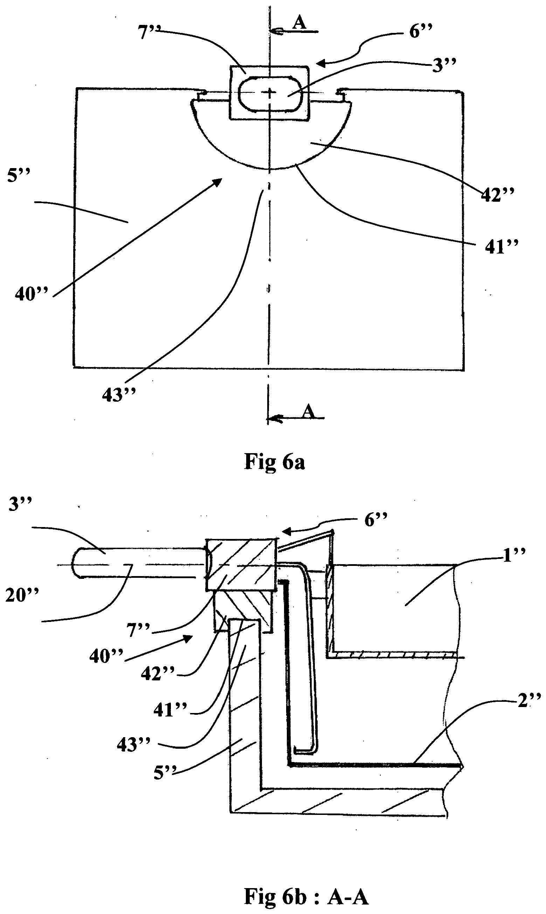

Selon un autre mode de réalisation illustré par les figures 6a et 6b, l'appareil de cuisson comporte un boîtier 5", un dispositif de monte et baisse 6" d'un panier 1" dans une cuve 2". Le dispositif de monte et baisse 6" comprend un support 7" prévu pour venir en appui sur le bord du boîtier 5" et une poignée 3" montée mobile sur le support 7" entre une première position, dans laquelle le panier 1" occupe une position relevée, et une deuxième position, dans laquelle le panier 1" occupe une position abaissée. Ainsi le panier 1" est monté mobile par rapport au support 7" entre la position relevée et la position abaissée. Ce mode de réalisation diffère des précédents modes de réalisation en ce que le boîtier 5" présente un organe de réception mobile 40" ménagé sur un bord supérieur 43" du boîtier 5", prévu pour porter le support 7"; l'organe de réception mobile 40" autorisant un degré de liberté en rotation dudit support 7" par rapport à l'appareil selon un axe 20" s'étendant en direction du panier 1".

L'organe de réception mobile 40" est formé par un demi pivot 42" monté mobile en rotation dans un demi palier 41" formé dans le boîtier 5". Plus particulièrement, le demi palier 41" est prévu pour venir en appui sur le boîtier 5".

Selon une variante non illustrée de ce mode de réalisation, le demi palier peut être ménagé au moins partiellement dans le bord supérieur de la cuve.

A titre de variante, le dispositif de monte et baisse 6" peut comporter un autre type de transmission qu'une transmission par leviers pour déplacer le panier à l'aide de la poignée. Le panier n'est pas nécessairement guidé par une glissière. Le panier peut par exemple être déplacé par un dispositif de monte et baisse muni d'un parallélogramme.

A titre de variante, l'appareil selon l'invention ne comporte pas nécessairement de couvercle.

A titre de variante, la cuve de l'appareil selon l'invention n'est pas nécessairement logée dans le boîtier.

La présente invention n'est nullement limitée à l'exemple de réalisation décrit et à ses variantes, mais englobe de nombreuses modifications dans le cadre des revendications.

## Revendications

1. Dispositif de monte et baisse (6, 6') d'un panier (1, 1') dans une cuve (2, 2') d'un appareil de cuisson, notamment friteuse, ledit dispositif (6, 6') comportant un support (7, 7') prévu pour venir en appui sur ledit appareil de cuisson, le panier (1, 1') étant monté mobile par rapport au support (7, 7') entre une position relevée et une position abaissée, une poignée (3, 3') montée mobile sur le support (7, 7') entre une première position, dans laquelle le panier (1, 1') amené par le relèvement de la poignée (3, 3') occupe la position relevée, et une deuxième position, dans laquelle le panier (1, 1') occupe la position abaissée, **caractérisé en ce que** le support (7, 7') inclut un moyeu (8, 8') autorisant un degré de liberté en rotation dudit moyeu (8, 8') par rapport à l'appareil selon un axe (20, 20') s'étendant en direction du panier (1, 1') pour mettre le panier (1, 1') en rotation par la rotation de la poignée (3, 3'), la poignée (3, 3') étant montée mobile sur le moyeu (8, 8') selon un axe de pivotement transversal (21, 21') par rapport à l'axe (20, 20') s'étendant en direction du panier (1, 1') entre la première position et la deuxième position.

2. Dispositif de monte et baisse (6, 6') selon la revendication 1, **caractérisé en ce que** le moyeu (8, 8') présente une face inférieure (10,10') comprenant des moyens d'appui (11,11') autorisant un degré de liberté en rotation, selon l'axe (20, 20') s'étendant en direction du panier (1, 1').

3. Dispositif de monte et baisse selon l'une des revendications 1 à 2, **caractérisé en ce que** le moyeu (8,8') présente une configuration cylindrique.

4. Dispositif de monte et baisse (6) selon l'une des revendications 1 à 3, **caractérisé en ce que** le support (7) inclut un palier (9) dans lequel le moyeu (8) peut pivoter.

5. Dispositif de monte et baisse (6) selon la revendication 4, **caractérisé en ce que** le moyeu (8) et le palier (9) comportent des butées (15a, 15b ; 16a, 16b) prévues pour limiter la rotation du moyeu (8) par rapport au palier (9).

6. Dispositif de monte et baisse (6) selon l'une des revendications 4 ou 5, **caractérisé en ce que** le palier (9) présente une conformation inférieure (13) agencée transversalement par rapport à l'axe (20).

7. Appareil de cuisson comportant une cuve (2, 2'), un panier (1, 1'), un dispositif de monte et baisse (6, 6') du panier (1, 1') dans la cuve (2, 2'), **caractérisé en ce que** le dispositif de monte et baisse (6, 6') est conforme à l'une des revendications 1 à 6.

8. Appareil de cuisson selon la revendication 7, **caractérisé en ce qu'**il comporte un boîtier (5, 5') fermé par un couvercle (4, 4'), le boîtier (5, 5') recevant la cuve (2, 2').

9. Appareil de cuisson selon la revendication 8, **caractérisé en ce que** le dispositif de monte et baisse (6) est conforme à une des revendications 4 à 6, et **en ce que** le palier (9) est disposé entre le boîtier (5) et le couvercle (4).

10. Appareil de cuisson selon l'une des revendications 7 à 9 **caractérisé en ce que** le dispositif de monte et baisse (6) est conforme à la revendication 5 et **en ce que** la conformation (13) du palier (9) repose sur un bord supérieur (22) de la cuve (2).

11. Appareil de cuisson selon l'une des revendications 7 ou 8, **caractérisé en ce qu'**il présente un bord supérieur (25') formant un guidage en rotation inférieur (26') pour le moyeu (8').

12. Appareil de cuisson selon l'une des revendications 8 ou 11 lorsque dépendant de la revendication 8, **caractérisé en ce que** le couvercle (4') présente un bord inférieur (23') formant un guidage en rotation supérieur (24') pour le moyeu (8').

13. Appareil de cuisson comportant un boîtier (5"),un dispositif de monte et baisse (6") d'un panier (1") dans une cuve (2"), le dispositif de monte et baisse (6") comprenant un support (7") prévu pour venir en appui sur le bord du boîtier (5"), le panier (1") étant monté mobile par rapport au support (7") entre une position relevée et une position abaissée, et une poignée (3") montée mobile sur le support (7") entre une première position, dans laquelle le panier (1") amené par le relèvement de la poignée (3") occupe la position relevée, et une deuxième position, dans laquelle le panier (1") occupe la position abaissée, **caractérisé en ce que** l'appareil présente un organe de réception mobile (40") ménagé sur un bord supérieur (43") du boîtier (5"), prévu pour porter le support (7") ; l'organe de réception mobile (40") autorisant un degré de liberté en rotation dudit support (7") par rapport à l'appareil selon un axe (20") s'étendant en direction du panier (1"), l'organe de réception mobile (40") étant formé par un demi pivot (42") monté mobile en rotation dans un demi-palier (41") formé dans le boîtier (5").

## Patentansprüche

1. Vorrichtung zum Anheben und Absenken (6, 6') eines Korbs (1, 1') in einer Wanne (2, 2') eines Kochgeräts, insbesondere einer Friteuse, wobei die Vorrichtung (6, 6') einen Träger (7, 7'), der vorgesehen ist, um an dem Kochgerät anzuliegen, wobei der Korb (1, 1') relativ zu dem Träger (7, 7') zwischen einer angehobenen Position und einer abgesenkten Position bewegbar angebracht ist, einen Griff (3, 3') aufweist, der auf dem Träger (7, 7') zwischen einer ersten Position, in der der Korb (1, 1'), der durch das Anheben des Griffs (3, 3') geführt wird, die angehobene Position einnimmt, und einer zweiten Position bewegbar ist, in der der Korb (1, 1') die abgesenkte Position einnimmt, **dadurch gekennzeichnet, dass** der Träger (7, 7') eine Nabe (8, 8') einschließt, die einen Freiheitsgrad bei der Drehung der Nabe (8, 8') relativ zu der Vorrichtung entlang einer Achse (20, 20') ermöglicht, die sich in Richtung des Korbs (1, 1') erstreckt, um den Korb (1, 1') in Drehung durch die Drehung des Griffs (3, 3') zu versetzen, wobei der Griff (3, 3') bewegbar an der Nabe (8, 8') entlang einer transversalen Schwenkachse (21, 21') relativ zu der Achse (20, 20'), die sich in Richtung des Korbs (1, 1') erstreckt, zwischen der ersten Position und der zweiten Position angebracht ist.

2. Vorrichtung zum Anheben und Absenken (6, 6') nach Anspruch 1, **dadurch gekennzeichnet, dass** die Nabe (8, 8') eine untere Fläche (10, 10') aufweist, die Stützmittel (11, 11') umfasst, die einen Freiheitsgrad bei der Drehung entlang der Achse (20, 20'), die sich in Richtung des Korbs (1, 1') erstreckt, ermöglichen.

3. Vorrichtung zum Anheben und Absenken nach einem der Ansprüche 1 bis 2, **dadurch gekennzeichnet, dass** die Nabe (8, 8') eine zylindrische Konfiguration aufweist.

4. Vorrichtung zum Anheben und Absenken (6) nach einem der Ansprüche 1 bis 3, **dadurch gekennzeichnet, dass** der Träger (7) ein Lager (9) aufweist, in dem die Nabe (8) schwenken kann.

5. Vorrichtung zum Anheben und Absenken (6) nach Anspruch 4, **dadurch gekennzeichnet, dass** die Nabe (8) und das Lager (9) Anschläge (15a, 15b; 16a, 16b) aufweisen, die vorgesehen sind, um die Drehung der Nabe (8) relativ zu dem Lager (9) zu begrenzen.

6. Vorrichtung zum Anheben und Absenken (6) nach einem der Ansprüche 4 oder 5, **dadurch gekennzeichnet, dass** das Lager (9) eine untere Gestaltung (13) aufweist, die quer zu der Achse (20) angeordnet ist.

7. Kochgerät, das eine Wanne (2, 2'), einen Korb (1, 1'), eine Vorrichtung zum Anheben und Absenken (6, 6') des Korbs (1, 1') in der Wanne (2, 2') aufweist, **dadurch gekennzeichnet, dass** die Vorrichtung zum Anheben und Absenken (6, 6') nach einem der Ansprüche 1 bis 6 ausgebildet ist.

8. Kochgerät nach Anspruch 7, **dadurch gekennzeichnet, dass** es ein Gehäuse (5, 5') aufweist, das durch eine Abdeckung (4, 4') verschlossen ist, wobei das Gehäuse (5, 5') die Wanne (2, 2') aufnimmt.

9. Kochgerät nach Anspruch 8, **dadurch gekennzeichnet, dass** die Vorrichtung zum Anheben und Absenken (6) nach einem der Ansprüche 4 bis 6 ausgebildet ist, und dass das Lager (9) zwischen dem Gehäuse (5) und der Abdeckung (4) angeordnet ist.

10. Kochgerät nach einem der Ansprüche 7 bis 9, **dadurch gekennzeichnet, dass** die Vorrichtung zum Anheben und Absenken (6) nach Anspruch 5 ausgebildet ist, und dass die Gestaltung (13) des Lagers (9) auf einer oberen Kante (22) der Wanne (2) aufliegt.

11. Kochgerät nach einem der Ansprüche 7 oder 8, **dadurch gekennzeichnet, dass** es eine obere Kante (25') aufweist, die eine untere Drehführung (26') für die Nabe (8') bildet.

12. Kochgerät nach einem der Ansprüche 8 oder 11, wenn abhängig von Anspruch 8, **dadurch gekennzeichnet, dass** die Abdeckung (4') eine untere Kante (23') aufweist, die eine obere Drehführung (24') für die Nabe (8') bildet.

13. Kochgerät, aufweisend ein Gehäuse (5"), eine Vorrichtung zum Anheben und Absenken (6") eines Korbs (1") in einer Wanne (2"), wobei die Vorrichtung zum Anheben und Absenken (6") einen Träger (7"), der vorgesehen ist, um an der Kante des Gehäuses (5") anzuliegen, wobei der Korb (1") relativ zu dem Träger (7") zwischen einer angehobenen Position und einer abgesenkten Position bewegbar angebracht ist, und einen Griff (3") aufweist, der auf dem Träger (7") zwischen einer ersten Position, in der der Korb (1"), der durch das Anheben des Griffs (3'") geführt wird, die angehobene Position einnimmt, und einer zweiten Position bewegbar ist, in der der Korb (1") die abgesenkte Position einnimmt, **dadurch gekennzeichnet, dass** das Gerät ein bewegbares Aufnahmeelement (40") aufweist, das auf einer oberen Kante (43") des Gehäuses (5") ausgebildet ist, die vorgesehen ist, um den Träger (7") zu tragen; wobei das bewegbare Aufnahmeelement (40") einen Freiheitsgrad bei der Drehung des Trägers (7") relativ zu dem Gerät entlang einer Achse (20") ermöglicht, die sich in Richtung des Korbs (1") erstreckt, wobei das bewegbare Aufnahmeelement (40") durch ein Halbgelenk (42") gebildet ist, dass drehbewegbar in einem Halblager (41") angebracht ist, das in dem Gehäuse (5") ausgebildet ist.

## Claims

1. Device for raising and lowering (6, 6') a basket (1, 1') in a container (2, 2') of a cooking appliance, in particular a fryer, said device (6, 6') comprising a support (7, 7') adapted to rest on said cooking appliance, the basket (1, 1') being mounted to be movable with respect to the support (7, 7') between a raised position and a lowered position, a handle (3, 3') mounted movably on the support (7, 7') between a first position in which the basket (1, 1') moved by raising the handle (3, 3') adopts the raised position and a second position in which the basket (1, 1') is in the lowered position, **characterised in that** the support (7, 7') includes a hub (8, 8') allowing a degree of rotational freedom of said hub (8, 8') relative to the device according to an axis (20, 20') extending in the direction of the basket (1, 1') for rotating the basket (1, 1') by rotating the handle (3, 3'), the handle (3, 3') being mounted movably on the hub (8, 8') according to a transverse pivot axis (21, 21') relative to the axis (20, 20') extending in the direction of the basket (1, 1') between the first position and the second position.

2. Device for raising and lowering (6, 6') according to claim 1, **characterised in that** the hub (8, 8') has a lower face (10, 10') comprising support means (11, 11') allowing a degree of rotational freedom about the axis (20, 20') extending in the direction of the basket (1, 1').

3. Device for raising and lowering according to any of claims 1 to 2, **characterised in that** the hub (8, 8') has a cylindrical form.

4. Device for raising and lowering (6) according to any of claims 1 to 3, **characterised in that** the support (7) includes a bearing (9) in which the hub (8) can pivot.

5. Device for raising and lowering (6) according to claim 4, **characterised in that** the hub (8) and the bearing (9) comprise abutments (15a, 15b; 16a, 16b) provided to limit the rotation of said hub (8) with respect to said bearing (9).

6. Device for raising and lowering (6) according to any of claims 4 or 5, **characterised in that** the bearing (9) has a lower structure (13) arranged transversely with respect to the axis (20).

7. Cooking appliance comprising a container (2, 2'), a basket (1, 1'), a device for raising and lowering (6, 6') the basket (1, 1') in the container (2, 2'), **characterised in that** the device for raising and lowering (6, 6') corresponds to any of claims 1 to 6.

8. Cooking appliance according to claim 7, **characterised in that** it comprises a housing (5, 5') closed by a lid (4, 4'), the housing (5, 5') receiving the container (2, 2').

9. Cooking appliance according to claim 8, **characterised in that** the device for raising and lowering (6) corresponds to any of claims 4 to 6, and **in that** the bearing (9) is arranged between the housing (5) and the lid (4).

10. Cooking appliance according to any of claims 7 to 9, **characterised in that** the device for raising and lowering (6) corresponds to claim 5 and **in that** the structure (13) of the bearing (9) rests on an upper edge (22) of the container (2).

11. Cooking appliance according to either claim 7 or 8, **characterised in that** it has an upper edge (25') forming a lower rotation guide (26') for the hub (8').

12. Cooking appliance according to either of claims 8 or 11, where dependent on claim 8, **characterised in that** the lid (4') has a lower edge (23') forming an upper rotation guide (24') for the hub (8').

13. Cooking appliance comprising a housing (5"), a device for raising and lowering (6") a basket (1") in a container (2"), the device for raising and lowering (6") comprising a support (7") adapted to rest on the edge of the housing (5"), the basket (1") being mounted to be moveable with respect to the support (7") between a raised position and a lowered position, and a handle (3") mounted movably on the support (7") between a first position, in which the basket (1") moved by raising the handle (3") adopts the raised position, and a second position in which the basket (1") is in the lowered position, **characterised in that** the device has a mobile receiving member (40") arranged on an upper edge (43") of the housing (5") provided to bear the support (7"); the mobile receiving member (40") authorising a degree of rotational freedom of said support (7") relative to the device according to an axis (20") extending in the direction of the basket (1"), the mobile receiving member (40") being formed by a half-pivot (42") mounted to be moveable in rotation in a half-bearing (41") formed in the housing (5").
